(19) Europäisches Patentamt
European Patent Office
Office européen des brevets

(11) **EP 4 722 617 A1**

(12) **EUROPEAN PATENT APPLICATION**

(43) Date of publication:
**08.04.2026 Bulletin 2026/15**

(21) Application number: **25207138.6**

(22) Date of filing: **07.10.2025**

(51) International Patent Classification (IPC):
**F25B 49/00** *(2006.01)*

(52) Cooperative Patent Classification (CPC):
**F25B 49/005;** F25B 2500/222; F25B 2700/193;
F25B 2700/197; F25B 2700/2115;
F25B 2700/21162; F25B 2700/21163;
F25B 2700/2117

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.10.2024 US 202418908141**

(71) Applicant: **Thermo King LLC
Minneapolis, MN 55420 (US)**

(72) Inventors:
• **HEAVEY, Shane
Minneapolis, Minnesota, 55420 (US)**
• **DONNELLAN, Wayne
Minneapolis, Minnesota, 55420 (US)**
• **GREENE, Michael Henry
Minneapolis, Minnesota, 55420 (US)**
• **COATES, Stephen
Minneapolis, Minnesota, 55420 (US)**

(74) Representative: **Haseltine Lake Kempner LLP
One Portwall Square
Portwall Lane
Bristol BS1 6BH (GB)**

(54) **LEAK DETECTION FOR DEACTIVATED CLIMATE CONTROL SYSTEM**

(57) An embodiment of detecting a refrigerant leak in a climate control system includes (a) determining that the climate control system is in a deactivated and equalized state. In addition, the method includes (b) comparing an average pressure of a refrigerant of the climate control system to a saturated vapor pressure of the refrigerant at an average temperature within the climate control system, in response to (a). Further, the method includes (c) detecting a refrigerant leak based at least in part on (b).

FIG. 4

EP 4 722 617 A1

**Description**

**BACKGROUND**

A climate control system may circulate a refrigerant through and between a plurality of heat exchangers in order to exchange heat between an interior space and an ambient environment. The refrigerant may be circulated at an elevated pressure such that the refrigerant may selectively change phase while flowing in the plurality of heat exchangers and thereby facilitate heat transfer during operations. As with any pressurized system, refrigerant leaks are common occurrence in climate control systems.

A refrigerant leak may not only degrade the performance of the climate control system, but may also present a health, safety, and environment risk depending on the type of refrigerant and precise nature of the leak.

**BRIEF SUMMARY**

Some embodiments disclosed herein are directed to a method of detecting a refrigerant leak in a climate control system. In some embodiments, the method includes (a) determining that the climate control system is in a deactivated and equalized state. In addition, the method includes (b) comparing an average pressure of a refrigerant of the climate control system to a saturated vapor pressure of the refrigerant at an average temperature within the climate control system, in response to (a). Further, the method includes (c) detecting a refrigerant leak based at least in part on (b).

Some embodiments disclosed herein are directed to a climate control system. In some embodiments, the climate control system includes a refrigerant circuit, a compressor configured to circulate a refrigerant through the refrigerant circuit, and a plurality of sensors distributed through the refrigerant circuit that are configured to detect pressures and temperatures of a refrigerant in the refrigerant circuit. In addition, the climate control system includes a controller communicatively coupled to the plurality of sensors and configured to: determine that the climate control system is in a deactivated and equalized state via the plurality of sensors; compare an average pressure of the refrigerant to a saturated vapor pressure of the refrigerant at an average temperature within the refrigerant circuit; and detect a refrigerant leak based at least in part on the comparison between the average pressure and the saturated vapor pressure.

Some embodiments disclosed herein are directed to a non-transitory, machine-readable medium including instructions that, when executed by a processor, cause the processor to: (a) determine that a climate control system is in a deactivated and equalized state; (b) compare an average pressure of a refrigerant of the climate control system to a saturated vapor pressure of the refrigerant at an average temperature within the climate control system, in response to (a); and (c) detect a refrigerant leak based at least in part on (b).

Embodiments described herein comprise a combination of features and characteristics intended to address various shortcomings associated with certain prior devices, systems, and methods. The foregoing has outlined rather broadly the features and technical characteristics of the disclosed embodiments in order that the detailed description that follows may be better understood. The various characteristics and features described above, as well as others, will be readily apparent to those having ordinary skill in the art upon reading the following detailed description, and by referring to the accompanying drawings. It should be appreciated that this disclosure may be readily utilized as a basis for modifying or designing other structures for carrying out the same purposes as the disclosed embodiments. It should also be realized that such equivalent constructions do not depart from the spirit and scope of the principles disclosed herein.

**BRIEF DESCRIPTION OF THE DRAWINGS**

For a detailed description of various embodiments, reference will now be made to the accompanying drawings in which:

FIG. 1 is a perspective view of a climate-controlled transportation unit that is configured to detect a refrigerant leak according to some embodiments disclosed herein;
FIG. 2 is a schematic diagram of a climate control system of the climate-controlled transportation unit of FIG. 1 according to some embodiments disclosed herein;
FIG. 3 is a plot showing a relationship of pressure to specific volume for an example refrigerant according to some embodiments disclosed herein;
FIG. 4 is a flow diagram of a routine for detecting a refrigerant leak in a deactivated climate control system according to some embodiments disclosed herein; and
FIG. 5 is a flow diagram of a routine for quantifying a refrigerant leak in a deactivated climate control system according to some embodiments disclosed herein.

## DETAILED DESCRIPTION

A refrigerant leak is problematic for a climate control system. Specifically, a refrigerant leak may degrade the performance capabilities of the climate control system. In addition, depending on the type of refrigerant and nature of the leak, a refrigerant leak may also pose a health, safety, or environmental risk. Further, a refrigerant leak is often initially difficult to detect. As a result, a refrigerant leak is typically not detected until the performance of the climate control system has noticeably degraded.

Moreover, a climate control system that is used to control an environmental condition (e.g., temperature, humidity, air quality, etc.) within an interior space of a transportation unit (e.g., a truck, trailer, container, box car, semi-tractor, bus, and the like) may be referred to as a transportation climate control system. Such a climate control system may typically only operate for a limited percentage of time over the course of a calendar year (or other set time period). For instance, a transportation climate control system may only operate when the transportation unit is transiting between locations. This relatively limited period of operation may further prolong the period of time between the development of a refrigerant leak and its subsequent detection.

Accordingly, embodiments disclosed herein include systems and methods for detecting a refrigerant leak in a climate control system while the climate control system is deactivated. While the embodiments disclosed herein may be useful in any climate control system that circulates a refrigerant to condition an interior space as described herein, they may find particular usefulness in transportation climate control systems which have limited operational periods as previously described. In some embodiments, the embodiments disclosed herein may detect and even potentially quantify the refrigerant leak based on one or more pressures and temperatures of the refrigerant within the climate control system when the climate control system is in a deactivated and equalized stated. Thus, through use of the embodiments disclosed herein, a refrigerant leak may be discovered more quickly in a climate control system, so that appropriate maintenance and repairs may be made.

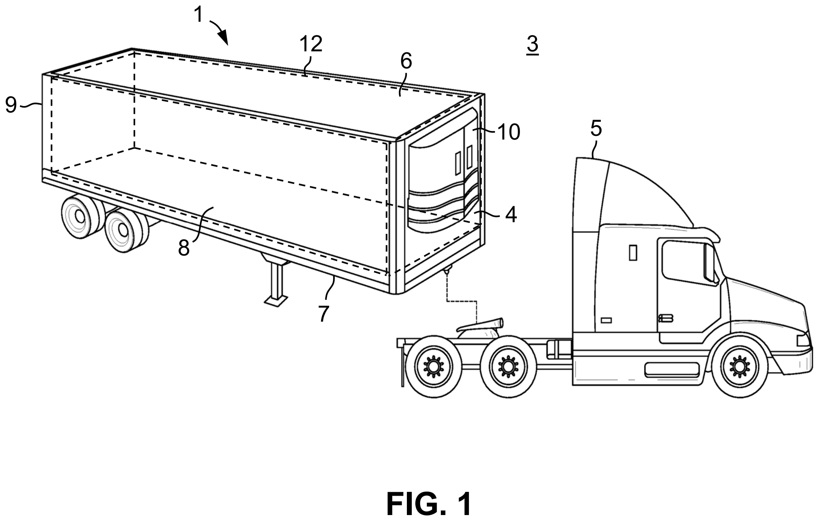

FIG. 1 shows a climate-controlled transportation unit 1 attached to a tractor (or truck) 5 according to some embodiments disclosed herein. The climate-controlled transportation unit 1 may be more simply referred to herein as a "transportation unit." The transportation unit 1 may be attached to the tractor 5 so that the tractor 5 may tow the transportation unit 1 to and from different locations. When not being transported, the transportation unit 1 may be parked and possibly unattached from the tractor 5.

The transportation unit 1 may comprise a trailer-mounted reefer container that includes or defines an interior space 12 therein for storing and transporting goods. The transportation unit 1 also includes a climate control system 10 that is configured to control and maintain one or more environmental conditions in the interior space 12, such as temperature and humidity (e.g., relative humidity). In particular, the transportation unit 1 may be particularly suitable for transporting perishable goods that must be stored at particular climate conditions to avoid or delay spoilage (e.g., food items, medicines, other organic or biologic products or items).

However, it should be appreciated that the illustration of the transportation unit 1 as a trailer-mounted reefer container is not limiting and is merely illustrative of some embodiments. For instance, in various embodiments, the transportation unit 1 may comprise any suitable transportation unit, such as a container on a flat car, an intermodal container, a track, a box car, a vehicle (e.g., a commercial or personal vehicle), a rail car, subway car, among others.

The climate control system 10 (which may be referred to as a "transportation climate control system") may be configured to provide conditioned air into the interior space 12 so as to control the one or more environmental conditions therein as previously described. In some embodiments, the climate control system 10 may be configured to maintain a cool temperature in the interior space 12, and thus may provide cool or cold air into the interior space 12 during operations.

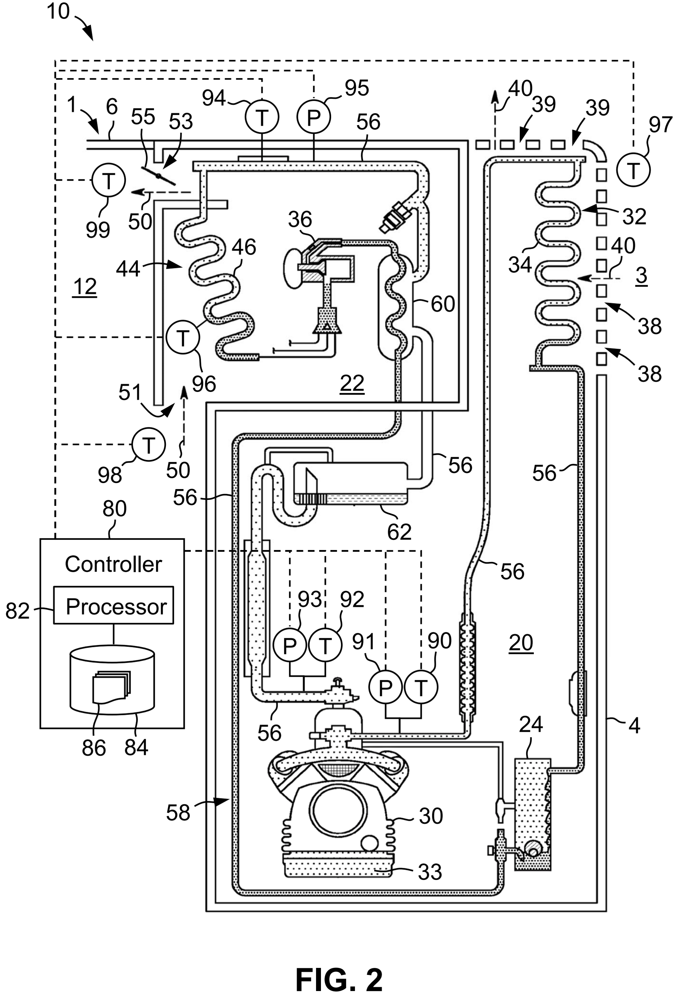

In some embodiments (and as illustrated in FIG. 1), the climate control system 10 may be at least partially positioned on front or forward-facing wall 4 of the transportation unit 1. The terms "front" or "forward-facing" for the wall 4 are used to indicate that the wall 4 is typically a leading or forward-facing surface when the transportation unit 1 is being towed by the tractor 5. Thus, as will be described in more detail herein, the climate control system 10 may be exposed to airflow (e.g., airflow 40 in FIG. 2) along the front wall 4 when the transportation unit 1 is being transported (e.g., towed) via the tractor 5. However, it should be appreciated that the climate control system 10 may at least partially occupy other positions or be coupled to other surfaces of the transportation unit 1. For instance, the climate control system 10 may be at least partially positioned on a top surface or roof 6 of the transportation unit 1 in some embodiments. In other embodiments, the climate control system 10 may be at least partially positioned on a bottom surface 7, side surface 8, or back surface 9 of the transportation unit 1.

The climate control system 10 may operate using electrical power. For instance, in some embodiments, the climate control system 10 may include or be coupled to one or more batteries (e.g., such as dedicated battery(ies) for the transportation unit 1 or climate control system 10, one or more batteries of the tractor 5, etc.). In some embodiments, the climate control system 10 may operate using electrical power generated by a motor or generator, such as electrical power generated by an engine or other component (e.g., alternator) of the tractor 5. For example, in some embodiments, the climate control system 10 may operate using electrical power provided from a plurality of different sources (such as combinations of those sources previously described above). In some embodiments, the climate control system 10 may be operated by use of an engine, such as an internal combustion engine. For example, in some embodiments, the climate control system 10 may be driven by a dedicated diesel engine.

Referring now to FIG. 2, a schematic diagram of the climate control system 10 of the transportation unit 1 of FIG. 1 is shown according to some embodiments. The climate control system 10 may be configured to circulate a refrigerant through a fluid circuit (or refrigerant circuit) 58 to transfer heat between the interior space 12 and an ambient environment 3 surrounding the transportation unit 1. Because the ambient environment 3 may often or typically comprise an outdoor environment, the ambient environment 3 may be referred to as an "outdoor environment."

The climate control system 10 may be positioned in one or more compartments that are integrated with or coupled to the transport unit 1. For instance, in the embodiment illustrated in FIG. 2, the climate control system 10 may be partially positioned in a first compartment 20 and a second compartment 22. The first compartment 20 may be separated and isolated (with respect to airflow) from the interior space 12, but is exposed (e.g., through the vents 38, 39 as described in more detail herein) to the ambient environment 3. Conversely, the second compartment 22 may be separated and isolated (again, with respect to airflow) from the ambient environment, but is exposed (e.g., through vents 51, 53) to the interior space 12. In some embodiments, the second compartment 22 may be at least partially defined within the interior space 12.

The climate control system 10 may include a compressor 30, a first heat exchanger 32, an expansion device 36, and a second heat exchanger 44 that are interconnected by a plurality of refrigerant lines 56 to at least partially define the fluid circuit 58. The first heat exchanger 32 and compressor 30 may be positioned in the first compartment 20, and the second heat exchanger 44 and expansion device 36 may be positioned in the second compartment 22.

The fluid circuit 58 may circulate any suitable refrigerant (or refrigerants) during operations. For instance, in some embodiments, the fluid circuit 58 may be circulate one or more refrigerants that may comprise hydrofluorocarbons (HFCs), chlorofluorocarbons (CFCs), hydrochlorofluorocarbons (HCFCs), fluorocarbons (FCs), hydrocarbons (HCs), Ammonia ($NH_3$), carbon dioxide ($CO_2$), or some combination thereof.

As previously described, the climate control system 10 may be configured to circulate a refrigerant in the refrigerant circuit 58 to cool the interior space 12. Thus, the climate control system 10 may be characterized as an air-conditioning system for the interior space 12. However, it should be appreciated that in some embodiments, the climate control system 10 may be configured to either heat or cool the interior space 12, such as in the case that the climate control system 10 is configured as a heat pump.

As shown in FIG. 2, during operations where climate control system 10 cools the interior space 12, the compressor 30 compresses the refrigerant in a gaseous state and outputs the compressed refrigerant to the first heat exchanger 32. The first heat exchanger 32 is configured to facilitate heat transfer from the refrigerant to the ambient environment 3. Specifically, the refrigerant may flow through one or more coils 34 of the first heat exchanger 32, while one or more inlet vents 38 direct an airflow 40 into the first compartment 20. The airflow 40 flows over and around the one or more coils 34 to thereby draw heat away from the refrigerant flowing therein. The heated airflow 40 is then directed out of the first compartment 20 and back into the ambient environment 3 via one or more outlet vents 39. The transfer of heat from the refrigerant to the airflow 40 via the first heat exchanger 32 may cause the refrigerant to at least partially condense to a liquid, such that the first heat exchanger 32 may function as a "condenser" and thus may be referred to herein as such. The inlet vent(s) 38 may be positioned along or adjacent to the front wall 4 of the transport unit 1 (FIG. 1), and the outlet vent(s) 39 may be positioned along or adjacent to the top surface or roof 6 of the transportation unit 1; however, other locations, positions, and arrangements for the vents 38, 39 are contemplated herein.

The airflow 40 may be generated by the movement of the transportation unit 1 within the ambient environment 3. Thus, the velocity of the airflow 40 may increase as the velocity of the transportation unit increases. In addition (or alternatively), the airflow 40 may be at least partially generated by one or more blowers, fans, or other air movers (not shown) that are coupled to transportation unit 1 (e.g., such as at least partially positioned in the first compartment or along an outside thereof).

The liquid (or substantially liquid) refrigerant discharged from the first heat exchanger 32 may then directed to a receiver tank 24 that is positioned in the first compartment 20. The receiver tank 24 may be configured to hold excess refrigerant that is not circulated through the refrigerant circuit 58. Specifically, because a transportation climate control system (e.g., such as the climate control system 10) is moved or transported between different locations, it may be exposed to varying heat loads via the changing ambient environment 3. When the heat load of the ambient environment 3 is relatively low, less refrigerant may need to be circulated through the refrigerant circuit 58 to maintain desired conditions in the interior space 12. Thus, the receiver tank 24 may provide a location along the refrigerant circuit 58 that allows for storage of this excess refrigerant, so that the excess refrigerant may be metered back into the refrigerant circuit 58 as and when needed.

The liquid refrigerant exiting the receiver tank 24 may then flow through into the second compartment 22 via a corresponding refrigerant line 56 and is then directed through the expansion device 36. The expansion device 36 may be actuated, set, or configured to controllably constrict and expand the flow of refrigerant so as to reduce a temperature thereof. The expansion device 36 comprise an expansion valve, such as an electronic expansion valve (EEVs) that is actuated by a controller (e.g., controller 80 described herein). Alternatively, the expansion device 36 may comprise a thermostatic expansion valve (TXV) that is configured to adjust in position (that is, in opening position) in response to one or more pressures and/or temperatures of the refrigerant flowing in the fluid circuit 58 (or a portion thereof). In still other embodiments, the expansion device 36 may comprise an orifice or other static or fixed expansion device.

The expanded, cold refrigerant is then directed through the second heat exchanger 44 which is configured to transfer heat from an airflow 50 flowing into the second compartment 22 from the interior space 12 to the refrigerant. Specifically, the airflow 50 may enter the second compartment 22 from the interior space 12 via one or more inlet vents 51. The refrigerant may flow through one or more coils 46 of the second heat exchanger 44, while the airflow 50 is flowed over and around the one or more coils 46 to thereby draw heat away from the airflow 50 and into the refrigerant. The then cooled airflow 50 is then discharged back into the interior space 12 via one or more outlet vents 53 so as to reduce a temperature (and relatively humidity) in the interior space 12.

The airflow 50 may be generated by one or more blowers, fans, or other air movers (not shown) that may be positioned in the interior space 12, the second compartment 22, or a combination thereof. In addition, an actuatable damper 55 may be positioned in or about the outlet vent(s) 53 so as to control a flow rate or velocity of the airflow 50 during operations.

The transfer of heat from the airflow 50 to the refrigerant via the second heat exchanger 44 may cause the refrigerant to vaporize or at least partially vaporize to a gas, such that the second heat exchanger 44 may function as an "evaporator" and thus may be referred to herein as such. The vaporized (or partially vaporized) refrigerant may progress from the second heat exchanger 44 back toward the compressor 30 to restart the cycle described above. However, while enroute to the compressor 30, the at least partially vaporized refrigerant may flow through an economizer 60 and then an accumulator 62. The economizer 60 may be positioned in the second compartment 22, while the accumulator 62 may be positioned in the first compartment 20.

The economizer 60 may comprise a heat exchanger that is configured to transfer heat from the refrigerant flowing into the expansion device 36 to the refrigerant flowing out of the second heat exchanger 44. Without being limited to this or any other theory, the economizer 60 may help to pre-cool refrigerant flowing to the expansion device 36 and may help to ensure that all (or substantially all) of the refrigerant flowing out of the second heat exchanger 44 is in a vapor state so as to avoid flowing liquid refrigerant back to the compressor 30.

In addition, the accumulator 62 may also help to prevent the flow of liquid refrigerant back to the compressor 30 during operations. For instance, the accumulator 62 may comprise a tank or pot that is configured to collect liquid refrigerant therein and allow vapor refrigerant to progress onward to the compressor 30 during operations.

The compressor 30 may include a lubricant 33, such an oil or other liquid lubricant, that is configured to lubricate and cool one or more moving components therein. As will be described in more detail herein, some amount of the refrigerant that is circulated along the refrigerant circuit 58 during operations may be dissolved into the liquid lubricant 33.

Referring still to FIG. 2, the performance of the climate control system 10 may be negatively impacted if a refrigerant leak develops at one or more points along the refrigerant circuit 58. As a result, the climate control system 10 may include or be communicatively coupled to a controller 80 that is configured to detect a leak of refrigerant in the refrigerant circuit 58 or component coupled thereto. As previously described, the controller 80 may be specifically configured to detect a refrigerant leak in the refrigerant circuit 58 while the climate control system 10 is not operating. Thus, the controller 80 may be configured to perform a leak detection routine as described herein when the climate control system 10 is deactivated so that refrigerant is not circulating through the refrigerant circuit 58 and is instead in an equalized state.

The controller 80 may be (or may be incorporated within) a main or master controller for the climate control system 10, the transportation unit 1, or the tractor 5. Alternatively, the controller 80 may be a standalone controller 80 for controlling particular aspects or components of the climate control system 10. Indeed, in some embodiments, the controller 80 may be at least partially embodied as a separate unit (e.g., such as a handheld unit in some embodiments) that is communicatively coupled to climate control system 10 to conduct a leak detection routine as described herein. Regardless, the controller 80 may be described and referred to herein as being a part of the climate control system 10 according to at least some embodiments.

The controller 80 may comprise one or more computing devices, such as a computer, tablet, smartphone, server, circuit board, or other computing device(s) or system(s). Thus, controller 80 may include a processor 82 and a memory 84.

The processor 82 may include any suitable processing device or a collection of processing devices. In some embodiments, the processor 82 may include a microcontroller, central processing unit (CPU), graphics processing unit (GPU), timing controller (TCON), scaler unit, or some combination thereof. During operations, the processor 82 executes machine-readable instructions (such as machine-readable instructions 86) stored on memory 84, thereby causing the processor 82 to perform some or all of the actions attributed herein to the controller 80. In general, processor 82 fetches, decodes, and executes instructions (e.g., machine-readable instructions 86). In addition, processor 82 may also perform other actions, such as, making determinations, detecting conditions or values, etc., and communicating signals. If processor 82 assists another component in performing a function, then processor 82 may be said to cause the component to perform the function.

The memory 84 may be any suitable device or collection of devices for storing digital information including data and machine-readable instructions (such as machine-readable instructions 86). For instance, the memory 84 may include volatile storage (such as random-access memory (RAM)), non-volatile storage (e.g., flash storage, read-only memory (ROM), etc.), or combinations of both volatile and non-volatile storage. Data read or written by the processor 82 when executing machine-readable instructions 86 can also be stored on memory 84. Memory 84 may comprise or include a "non-transitory machine-readable medium," where the term "non-transitory" does not include or encompass transitory propagating signals.

The processor 82 may include one processing device or a plurality of processing devices that are distributed within (or communicatively coupled to) controller 80 or more broadly within one or more of the climate control system 10, transportation unit 1, and/or tractor 5. Likewise, the memory 84 may include one memory device or a plurality of memory devices that are distributed within (or communicatively coupled to) controller 80 or more broadly within one or more of the climate control system 10, transportation unit 1, or tractor 5. Thus, the controller 80 may comprise a plurality of individual "controllers" distributed throughout one or more of the climate control system 10, transportation unit 1, or tractor 5 and that may be communicatively coupled to one another. In still some embodiments, the controller 80 may also comprise one or more "controllers" (including a processor and a memory as previously described) that are remotely positioned from one or more of the climate control system 10, transportation unit 1, or tractor 5.

The controller 80 may be communicatively coupled to various components of the climate control system 10 so that the controller 80 may conduct, control, and direct a leak detection routine for the climate control system 10. For instance, the controller 80 may be communicatively coupled to a plurality of sensors that are configured to measure or detect one or more conditions or parameters (or values indicative thereof) associated with the climate control system 10. Specifically, the controller 80 may be communicatively coupled to a plurality of pressure sensors 91, 93, 95 that are configured to measure or detect pressures along the refrigerant circuit 58 (or one or more values that are indicative thereof). Specifically, the pressure sensors 91 and 93 may be positioned and configured to measure or detect a discharge pressure and a suction pressure, respectively, for refrigerant flowing out of and into, respectively, the compressor 30. Thus, the pressure sensor 91 may be positioned along a refrigerant line 56 of the refrigerant circuit 58 that extends between the compressor 30 and the first heat exchanger 32, and the pressure sensor 93 may be positioned along a refrigerant line 56 of the refrigerant circuit 58 that extends between the accumulator 62 and the compressor 30. The pressure sensor 95 may be positioned and configured to measure or detect a pressure of the refrigerant that is discharged from the second heat exchanger 44. Thus, the pressure sensor 95 may be positioned along a refrigerant line 56 of the refrigerant circuit 58 that extends between the second heat exchanger 44 and the economizer 60.

In addition, the controller 80 may be communicatively coupled to a plurality of temperature sensors 90, 92, 94, 96 that are configured to measure or detect temperatures along the refrigerant circuit 58 (or one or more values that are indicative thereof). Specifically, the temperature sensors 90 and 92 may be positioned and configured to measure or detect a discharge temperature and a suction temperature, respectively, for refrigerant flowing out of and into, respectively, the compressor 30. Thus, the temperature sensor 90 may be positioned along a refrigerant line 56 of the refrigerant circuit 58 that extends between the compressor 30 and the first heat exchanger 32, and the temperature sensor 92 may be positioned along a refrigerant line 56 of the refrigerant circuit 58 that extends between the accumulator 62 and the compressor 30. The temperature sensor 95 and 96 may be positioned and configured to measure or detect a coil temperature and discharge temperature, respectively, for refrigerant flowing through the second heat exchanger 44. Thus, the temperature sensor 96 may be positioned along the coil 46 of second heat exchanger 44, and the temperature sensor 95 may be positioned and configured to measure or detect a pressure of the refrigerant that is discharged from the second heat exchanger 44.

Further, the controller 80 may be communicatively coupled to temperature sensors 98, 99 that are configured to measure or detect a temperature of the airflow 50 discharged into the interior space 12 (or one or more values that are indicative thereof), and a temperature sensor 97 that is configured to measure or detect a temperature of the ambient environment 3 (or one or more values that are indicative thereof). The temperature sensor 97 may be positioned adjacent to one or more of the inlet vents 38, and the temperature sensor 99 may be positioned adjacent to one or more of the outlet vents 53.

The controller 80 may be communicatively coupled to the sensors 90, 91, 92, 93, 94, 95, 96, 97, 98, 99 via any suitable wired or wireless communication link, or a combination of wired and wireless communication links. These communication links are generally illustrated in FIG. 2 with broken lines.

In some embodiments, the sensors 90, 91, 92, 93, 94, 95, 96, 97, 98, 99 (or a subset thereof) may be utilized by the controller 80 (or another controller) to direct operation of the climate control system 10 in addition to performing a leak detection routine as described herein. Specifically, during a leak detection operation or routine, the controller 80 may monitor output signals from one or more (including all) of the sensors 90, 91, 92, 93, 94, 95, 96, 97, 98, 99 to detect whether refrigerant has leaked from the refrigerant circuit 58 and also potentially to quantify the mass of refrigerant that has leaked from the refrigerant circuit 58. The controller 80 may be configured to perform the leak detection (and potentially the leak quantification) operation when the climate control system 10 is deactivated and the refrigerant contained therein has reached a static and equalized state. It should be appreciated that additional sensors (e.g., such as additional pressure or temperature sensors) may be distributed within or around the climate control system 10 and at least some of these additional sensors may also be used by the controller 80 to perform the leak detection routine as described herein.

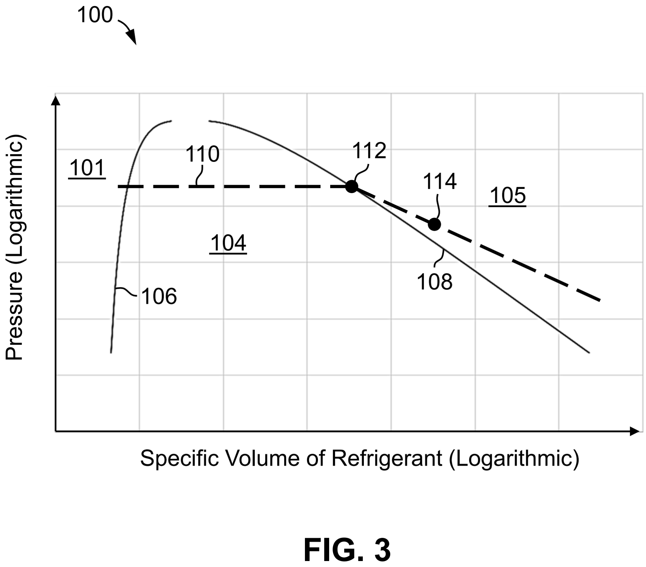

In some embodiments, the controller 80 may be configured to detect a refrigerant leak by comparing an average pressure of the refrigerant of the climate control system 10 to a saturated vapor pressure for the refrigerant at the current average (or ambient) temperature to determine whether a refrigerant leak has occurred. Specifically, referring to FIG. 3, a plot 100 showing the relationship between pressure and specific volume of a refrigerant is shown according to some embodiments, The plot 100 shows the specific volume along the X-axis, and the pressure along the Y-axis. Both the specific volume and pressure are illustrated in a logarithmic scale in FIG. 3.

The specific volume of the X-axis may refer to the volume of the refrigerant divided by the mass of the refrigerant. In the case of the climate control system 10, the volume occupied by the refrigerant is known and fixed. Specifically, the volume may comprise the volume defined in the refrigerant circuit 58 (including the components coupled there along such as the heat exchangers 32, 44, compressor 30, receiver 24, economizer 60, accumulator 62, refrigerant lines 56, etc.). However, the mass of the refrigerant may vary depending on the actual charge of refrigerant contained in the refrigerant circuit 58 during operations. Thus, if a refrigerant leak occurs, the mass of the refrigerant would fall so that the specific volume of the refrigerant (the X-axis in the plot 100) would increase (or move to the right in FIG. 3).

The plot 100 shows a saturated liquid line 106 and a saturated vapor line 108 that together form a dome. The liquid line 106 may define the point (depending on the pressure) at which the refrigerant fully (or substantially fully) transitions to a liquid phase based on the specific volume, likewise, the vapor line 108 may define the point (again, dependent on the pressure) at which the refrigerant fully (or substantially fully) transitions to vapor or gas phase based on the specific volume.

Thus, the region or portion 101 of the plot 100 that is to the left of the liquid line 106 in FIG. 3 may represent a region where the refrigerant is fully in a liquid phase, the region or portion 105 of the plot 100 that is to the right of the vapor line 108 may represent a region where the refrigerant is fully in a vapor phase, and the region or portion 104 of the plot 100 that is between the lines 106 ,108 and therefor within the "dome" may represent a region where the refrigerant is partially in both a liquid and a vapor phase (which may be referred to as a "mixed phase" for the refrigerant).

An isotherm line 110 is also shown in plot 100. The isotherm line 110 may represent a line of constant temperature along the plot 100. A plurality of different isotherms may be vertically stacked (along the pressure or Y-axis) in plot 100 to represent a plurality of different temperatures for the refrigerant. However, only one isotherm line 110 is represented in plot 100 of FIG. 3 in order to simplify the drawings. The liquid line 106 and vapor line 108 may define the saturated liquid pressure and saturated vapor pressure, respectively, of the refrigerant for a particular temperature (along the isotherm line 110).

The climate control system 10 may be initially charged with refrigerant so that the pressure of the refrigerant settles to the saturated vapor pressure along (or near) the vapor line 108 that is associated with the current ambient temperature (represented by the isotherm line 110, and assuming that the isotherm line 110 represents the ambient temperature). This expected saturated vapor pressure is illustrated by intersection point 112 shown in plot 100 of FIG. 3 (note: the expected saturated vapor pressure may be to the left of the intersection point 112 along the isotherm line 110 in some situations). However, if the charge of refrigerant is low (such as due to a refrigerant leak), the mass of the refrigerant may be reduced relative to the static available volume in the refrigerant circuit 58 so that the specific volume of the refrigerant may increase. As a result, when the refrigerant reaches an equalized state at the ambient temperature (represented by the isotherm line 110) while the climate control system 10 is deactivated, the pressure of the refrigerant may fall below the saturated vapor pressure along the isotherm line 110 to a second point 114 in FIG. 1. Without being limited to this or any other theory, the controller 80 may compare the pressure of the refrigerant to the saturated vapor pressure at the current ambient conditions (e.g., temperature) in order to indicate that mass of refrigerant has been leaked out of the refrigerant circuit 58. In addition, the controller 80 may also utilize the outputs from one or more of the sensors 90, 91, 92, 93, 94, 95, 96, 97, 98, 99 in order to quantify the mass of refrigerant that has leaked out of the refrigerant circuit 58 so as to better inform a technician or other individual how best to address the detected leak.

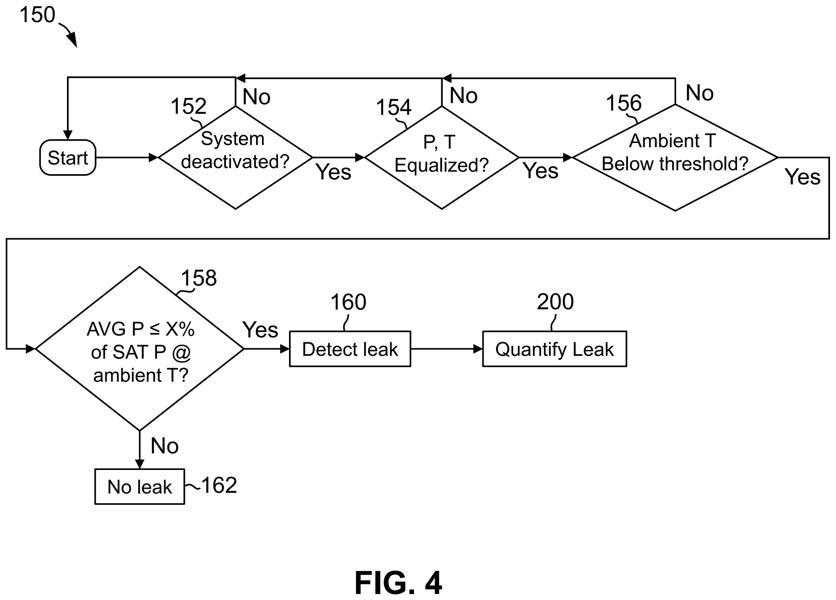

Referring now to FIG. 4, a flow diagram illustrating an embodiment of a leak detection routine 150 that may be performed at least in part by the controller 80 is shown. In some embodiments, the flow diagram of the leak detection routine 150 may be representative at least some of the machine-readable instructions 86 that are stored on memory 84 and executed by the processor 82 as previously described (FIG. 2).

In describing the features of the leak detection routine 150, continuing reference may be made to the climate control system 10 shown in FIG. 2 and previously described. However, it should be appreciated that the leak detection routine 150 may be performed using any other suitable climate control system that circulates a refrigerant, but that may be different in at least some respects from the climate control system 10. For instance, in some embodiments, an embodiment of the leak detection routine 150 may be performed to detect a refrigerant leak in a climate control system (e.g., an air-conditioning system, heat pump, etc.) for a residential home, apartment, or commercial building. Thus, reference to the climate control system 10 when describing embodiments of the leak detection routine 150 (FIG. 4) is not intended to limit the application of leak detection routine to other climate control systems.

Initially, leak detection routine 150 may include determining whether the climate control system is deactivated in decision block 152. For instance, the controller 80 may determine that the climate control system 10 is deactivated by monitoring the operational status of one or more components thereof (e.g., such as the compressor 30, one or more blowers or fans, etc.). Alternatively, the controller 80 may receive an indication that the climate control system 10 is deactivated from another controller or control system, from a user or technician, etc.

If the climate control system is not deactivated, and is therefore operating, the determination at decision block 152 is "No" and the routine 150 may terminate or return to start. If, on the other hand, the climate control system is deactivated, the determination at decision block 152 is "Yes" and the routine 150 may proceed onward to decision block 154.

Decision block 154 may include determining whether the climate control system has reached an equalized state. The equalized state may be characterized by a substantially steady pressure, temperature, or both for the refrigerant contained in the climate control system. Thus, in some embodiments, decision block 154 may comprise determining whether the temperature, pressure or both of the refrigerant has equalized. In some embodiments, the controller 80 may determine that the refrigerant has equalized in the climate control system 10 by monitoring the output form the pressure sensors 91, 93, 95, temperature sensors 90, 92, 96, 94, 97, 98, 99 or both. Specifically, the controller 80 may determine that the refrigerant has reached an equalized state (and is therefore equalized) when all (or a select subset of) the pressure sensors 91, 93, 95 are measuring or detecting substantially the same pressure, when all (or a select subset of) temperature sensors 90, 92, 96, 94, 97, 98, 99 are measuring or detecting substantially the same temperature, or both. In some embodiments, the controller 80 may determine that the refrigerant has reached an equalized state when the pressure sensors 91, 93, 95 (or a subset) are all detecting pressures that fall within a predetermined range of one another, the temperature sensors 90, 92, 96, 94, 97, 98, 99 (or a subset) are all detecting temperatures that fall within a predetermined range of one another. In some embodiments, the absolute value of the predetermined range for the pressure sensors 91, 93, 95 may comprise about 10 kilopascals (kPa), and the absolute value of the predetermined range for the temperature sensors 90, 92, 96, 94, 97, 98, 99 may comprise about 2 degrees Kelvin (°K) (or 2 degrees Celsius (°C) in some embodiments); however, other values are contemplated herein. When the climate control system 10 has reached an equalized state, the temperature of the refrigerant equal or approach the ambient temperature of the ambient environment 3.

Without being limited to this or any other theory, ensuring that the pressure, temperature, or both of the refrigerant has reached an equalized state in block 154 may allow subsequent analysis of the pressures and temperatures of the refrigerant to be dictated by the ambient conditions and not lingering pressures or temperatures that are influenced by a previous operation of the climate control system 10. This may help to ensure that the leak detection routine 150 accurately detects and potentially quantifies a refrigerant leak.

If it is determined that the climate control system has not reached an equalized state as previously described, the determination at decision block 154 is "No" and the routine 150 may terminate, return to start, or repeat the decision block 154. If, on the other hand, it is determined that the refrigerant pressure, temperature, or both have equalized as previously described, the determination at decision block 154 is "Yes" and the routine 150 may proceed onward to decision block 156.

Decision block 156 may include determining whether the ambient temperature is below a threshold. For instance, the controller 80 may monitor the output of one or more of the temperature sensors to determine the ambient temperature conditions. For instance, the temperature sensor 97 may more or less directly measure the ambient temperature of the ambient environment 3. As another example, once the climate control system 10 reaches an equalized state (e.g., block 154), the temperature sensors 90, 92, 96, 94, 97, 98, 99 may all equalize at or near the ambient temperature as previously described. Thus, the controller 80 may monitor an average temperature across the temperature sensors 90, 92, 96, 94, 97, 98, 99 (or subset thereof) after determining that the climate control system 10 has reached an equalized state in order to determine the ambient temperature to compare with the threshold at block 156.

In addition, as previously described, some of the refrigerant contained in the refrigerant circuit 58 may be dissolved into the liquid lubricant 33 for the compressor 30. As the ambient temperature (and thus the temperature of the refrigerant) increases, a greater fraction or percentage of the refrigerant may dissolve into the lubricant 33, which may reduce a mass of vapor refrigerant contained in the refrigerant circuit 58. For sufficiently high ambient temperatures, the increased fraction of dissolved refrigerant may produce false positives for leak detection, so that the controller 80 may avoid performing the leak detection routine when the ambient temperature is above a predetermined threshold. In some embodiments, the threshold applied at decision block 156 may be about 38°C; however, other thresholds are contemplated for different embodiments. Indeed, the particular threshold applied at block 156 may be dependent upon a variety of factors, such as the type of refrigerant, the design, type, size, etc. of compressor 30, the type and volume of lubricant 33, etc.

If it is determined that the ambient temperature is at or above the threshold, the determination at decision block 156 is "No" and the routine 150 may terminate or return to start. If, on the other hand, it is determined that the ambient temperature is below the threshold, the determination at decision block 156 is "Yes" and the routine 150 may proceed onward to decision block 158.

It should be appreciated that the precise ordering of the blocks 152, 154, 156 may be varied in different embodiments. For instance, in some embodiments, the block 156 may be performed before the blocks 152, 154, or one or more of the blocks 152, 154, 156 may be performed at least partially at the same time. Thus, the above-described ordering of the blocks 152, 154, 156 is only illustrative of some embodiments and should not be limiting to other embodiments of routine 150.

Decision block 158 includes determining whether and average pressure (AVG P) of the refrigerant is less than or equal to X% of the saturated pressure (SAT P) of the refrigerant at the ambient temperature. In some embodiments, the threshold of X% may comprise a predetermined percentage of the saturated pressure of the refrigerant. Selection of the threshold "X%" may adjust a sensitivity of the leak detection method, and thus may be varied depending on a variety of factors, such as refrigerant type, mass, type of climate control system, the ambient temperature (e.g., such as a difference between the ambient temperature and a most recent setpoint temperature for the climate control system 10), etc. In some embodiments, the threshold "X%" may equal about 80% such that block 158 may comprise determining whether the average pressure of the refrigerant is less than or equal to 80% of the saturated pressure of the refrigerant the ambient temperature. In some embodiments, the threshold "X%" may be greater than or less than 80% in block 158 (such as about 75% in some embodiments).

As previously described with reference to FIG. 3, a climate control system may be initially charged with refrigerant so that an average pressure of the refrigerant equals or substantially equals the saturated vapor pressure at ambient conditions (e.g., intersection point 112). Thus, if the average pressure of the refrigerant in the climate control system 10 is sufficiently below that of the saturated pressure for the average (or ambient) temperature, this may indicate that the mass of the refrigerant has been reduced from the initial, proper charge. This reduction may therefore indicate a leak of refrigerant from the climate control system 10.

The controller 80 may determine the average pressure of the refrigerant by calculating an average of the pressure values measured or detected by the pressure sensors 91, 93, 95 (or a subset thereof). In addition, the controller 80 may determined the saturated pressure based on the average (or ambient) temperature in the refrigerant circuit 58. For instance, as previously described, when the climate control system 10 is in a deactivated and equalized state, the temperature of the refrigerant may be equal to or may approach the ambient temperature of the ambient environment 3. Thus, the saturated pressure may be determined based on either the average temperature across the temperature sensors 90, 92, 96, 94, 97, 98, 99 (or a subset thereof), or an ambient temperature detected or determined by the temperature sensor 97. Regardless, in some embodiments, the average (or ambient) temperature may be utilized within a mathematical expression for determining the saturated vapor pressure based on the type of refrigerant (which may comprise a pure or single molecule refrigerant or a blended refrigerant). Specifically, in some embodiments, the saturated pressure may be calculated via the following expression:

$$Saturated\ Vapor\ Pressure\ (kPa) = C_0 + C_1 T_{av} + C_2 T_{av}^2 + C_3 T_{av}^3 \qquad (1)$$

where $C_0$, $C_1$, $C_2$, $C_3$ are constants that are determined based on the type of refrigerant(s) included in the climate control system and $T_{av}$ is the average or ambient temperature determined by use of one or more of the temperature sensors 90, 92, 96, 94, 97, 98, 99 as previously described. In some embodiments, the saturated vapor pressure may alternatively be determined by use of other known expressions, functions, or equations, such as, for instance Hyland & Wexler equation, the Buck equation, the Antoine equation, etc. For instance, in some embodiments, the dew point temperature-pressure relationship may be utilized to determine the saturated vapor pressure.

The controller 80 may determine the saturated pressure via Equation (1) via any suitable method. For instance, the controller 80 may query a plot or look-up table (which may be stored on the memory 84) that includes pre-calculated values of the saturated pressure based on Equation (1) for various ambient temperatures. In these embodiments, the controller 80 may pick a closest fit for the average or ambient temperature in the plot or look-up table, or may interpolate between two listed values in the plot or look-up table for the average or ambient temperature. As another example, the controller 80 may directly apply Equation (1) to provide the saturated vapor pressure via the average or ambient temperature.

If the average pressure is determined to be greater than X% of the saturated pressure, the determination at decision block 158 is "No" and the routine 150 may proceed to determine that no leak is detected at block 162. Thus, the routine 150 may terminate or return to start. If, on the other hand, the average pressure of the refrigerant is determined to be less than or equal to X% of the saturated pressure, the determination at decision block 158 is "Yes" and the routine 150 may proceed to determine that a refrigerant leak has been detected at block 160.

In some embodiments, if the controller 80 detects a leak via blocks 158, 160, the controller 80 may output a suitable alert or other message to call attention to the leak, and may even prevent operation of the climate control system 10. For instance, the controller 80 may output a suitable alert that may be communicated to a user via a suitable audible, visual, tactile, etc. alarm so as to alert a user that a refrigerant leak has been detected. In some embodiments, the controller 80 may output an alert to another controller or control system, which may in turn take some action (including outputting an alert or preventing operation of the climate control system 10 as previously described) based on the detection of the leak.

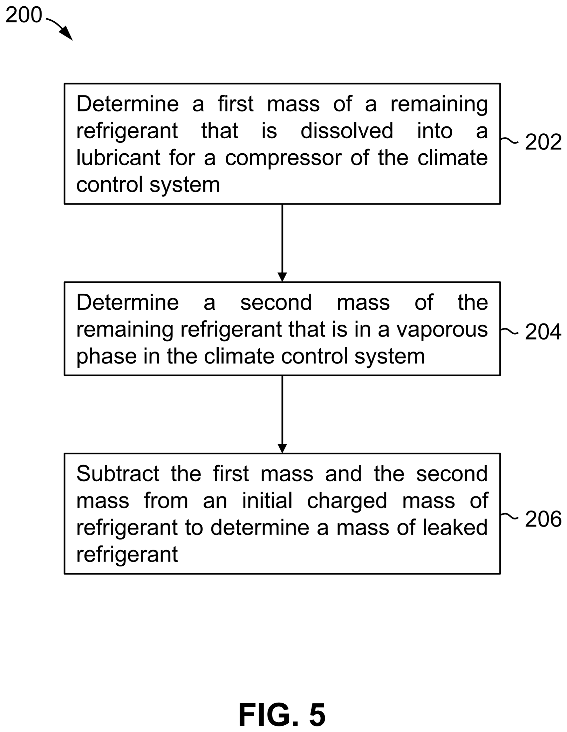

In some embodiments, the routine 150 may effectively terminate after the leak detection via blocks 158 and 160. In some embodiments, after a leak is detected at block 160, the routine 150 may proceed to quantify the leak at block 200. For instance, as described in more detail herein, quantifying the leak at block 200 may comprise calculating or estimating the mass of refrigerant that has leaked out of the climate control system 10. Further details regarding embodiments of the leak quantification via block 200 is described in more detail herein with reference to FIG. 5.

Specifically, FIG. 5 illustrates a flow diagram of an embodiment of a leak quantification routine 200 that may be performed as part of the leak detection routine 150 shown in FIG. 4 and previously described. Quantification of the refrigerant leak may be useful for a number of purposes, such as characterization of the refrigerant leak for maintenance purposes, tracking mass or volumes of leaked refrigerant for environmental purposes, and even for detecting the leak in some circumstances.

In some embodiments, the leak quantification routine 200 may be performed independently and not connected with the performance of the rest of the leak detection routine 150 previously described. In some embodiments, the leak quantification routine 200 may be performed to both detect a refrigerant leak in a climate control system (e.g., climate control system 10) and to quantify the leak. In some embodiments, the flow diagram of the leak quantification routine 200 may be representative at least some of the machine-readable instructions 86 that are stored on memory 84 and executed by the processor 82 as previously described (FIG. 2). Further, in some embodiments, embodiments of the leak quantification routine 200 may be performed by a different controller or control device (e.g., such as a separate computing device) that is remote from the climate control system 10. Thus, the flow diagram of the leak quantification routine 200 may also be representative of machine-readable instructions that are stored on a memory and executable by a processor that is separate and potentially remotely positioned from controller 80 and climate control system 10.

In describing the features of the leak quantification routine 200, continuing reference may be made to the climate control system 10 shown in FIG. 2 and previously described. However, it should be appreciated that the leak quantification routine 200 may be performed using any other suitable climate control system that circulates a refrigerant, but that may be different in at least some respects from the climate control system 10. For instance, in some embodiments, an embodiment of the leak quantification routine 200 may be performed to quantify a refrigerant leak in a climate control system (e.g., an air-conditioning system, heat pump, etc.) for a residential home, apartment, or commercial building). Thus, reference to the climate control system 10 when describing embodiments of the leak quantification routine 200 (FIG. 5) is not intended to limit the application of leak quantification routine to other climate control systems.

For instance, routine 200 may include determining a first mass of a remaining refrigerant that is dissolved into a lubricant for a compressor of the climate control system at block 202. In some embodiments, determining the first mass of remaining refrigerant at block 202 may include determining the first mass of refrigerant based on an average pressure of the refrigerant in the climate control system. As previously described, the climate control system may be deactivated and in an equalized state (e.g., via blocks 152, 154 in FIG. 4) when performing the leak quantification routine 200 of FIG. 5. Thus, the first mass of refrigerant may be determined via block 202 based on one or more pressures (including an average pressure) of the refrigerant after the refrigerant has equalized with ambient conditions.

In some embodiments, the controller 80 may determine the first mass of refrigerant dissolved into the lubricant 33 of the compressor 30 by utilizing the average or ambient pressure of the refrigerant in the following mathematical expression:

$$M_{Dissolved\ Refrigerant} = K * P_{av} \left( 1 - e^{\left( \frac{-t_{off}}{tau} \right)} \right) \qquad (2)$$

where K and tau are constants, $P_{av}$ is the average pressure within the climate control system (e.g., as an average across the pressure sensors 91, 93, 95 or a subset thereof), and $t_{off}$ is the amount of time (in hours) that the climate control system 10 has been deactivated (e.g., which may comprise a time since the compressor 30 was last operating). One having ordinary skill in the art will appreciate that Equation (2) is based on Henry's law, and thus the constant K is Henry's law constant that is based on the particular refrigerant and lubricant 33 combination.

In addition, in Equation (2), tau is a time constant in a "first order step response" which, as one having ordinary skill in the art will appreciate, characterizes a rate at which refrigerant dissolves into the lubricant 33 following the shut-down of the climate control system 10. Thus, the value of tau depends on the particular refrigerant and lubricant 33 combination as well as the design and configuration of the climate control system 10 itself. In some embodiments, tau is experimentally derived for the particular climate control system (e.g., climate control system 10) in question. If $t_{off}$ is sufficiently large, then the entire parenthetical ( $1 - e^{\left( \frac{-t_{off}}{tau} \right)}$ ) in Equation (2) will approach a value of "1" so that mass of the dissolved refrigerant ($M_{Dissolved\ Refrigerant}$) will simply be the product of K and $P_{av}$ per Henry's law.

In addition, routine 200 may include determining a second mass of the remaining refrigerant that is in a vaporous phase in the climate control system at block 204. In some embodiments, determining the second mass of remaining refrigerant at block 204 may include determining the second mass of refrigerant based on an average pressure an average temperature or both of the refrigerant in the climate control system. Because the climate control system may be deactivated and in an equalized state (e.g., via blocks 152, 154 in FIG. 4) when performing the leak quantification routine 200 of FIG. 5, the second mass of refrigerant may be determined via block 204 based on pressures, temperatures, or both of the refrigerant after the refrigerant has equalized with ambient conditions.

In some embodiments, the controller 80 may determine the second mass of refrigerant in a vapor phase ($M_{vapor}$) within the refrigerant circuit 58 by utilizing the average or ambient pressure and temperature of the refrigerant in the Ideal Gas law as shown in the following mathematical expression:

$$M_{Vapor} = \frac{(P_{av}V)}{RT_{av}} \qquad (3)$$

where R, V are constants that are based on the type of refrigerant(s) used in the climate control system, and $P_{av}$ and $T_{av}$ comprise the average pressure and temperature in the climate control system. For instance, the controller 80 may determine $P_{av}$ and $T_{av}$ by calculating the average pressure across the pressure sensors 91, 93, 95 (or subset thereof) and the average temperature across the temperature sensors 90, 92, 96, 94, 97, 98, 99 (or subset thereof), after the climate control system 10 is deactivated and has reached an equalized state (e.g., via blocks 152, 154 in FIG. 4).

Further, once the first mass and second mass of remaining refrigerant are determined via blocks 202 and 204, respectively, routine 200 further includes subtracting the first mass and the second mass from an initial charge mass of refrigerant to determine a mass of leaked refrigerant at block 206. For instance, the controller 80 may receive the initial charged volume of refrigerant via a user input (e.g., such as a technician inputted value when the climate control system 10 was initially charged) or based on specifications of the climate control system 10 that were designated by the manufacturer of climate control system 10.

As previously described, in some embodiments, the controller 80 may perform the leak quantification routine 200 to both detect and quantify a refrigerant leak. For instance, in some embodiments, the controller 80 may determine that the climate control system 10 is in a deactivated and equalized state and that the ambient temperature is below a suitable threshold via blocks 152, 154, 156 of routine 150 shown in FIG. 4 and previously described. Thereafter, rather than proceed to block 158, the controller 80 may proceed directly to the leak quantification routine 200 (FIG. 5). If the determined mass of remaining refrigerant (as a sum of the first mass and the second mass) determined via blocks 202, 204 is equal to or within a predetermined range of the initial charged mass, the controller 80 may determine that no leak has occurred. However, if the determined mass of remaining refrigerant determined via blocks 202, 204 is sufficiently below the initial charged mass (e.g., such as less than or equal to 60%, 75%, 80%, 90%, etc. of the initial charged mass), the controller 80 may both determine that a leak has occurred and may quantify the mass of leaked refrigerant (e.g., via block 206 as previously described). Without being limited to this or any other theory, use of an embodiment of the leak quantification routine 200 to detect a leak may be useful for detecting a refrigerant leak when the ambient temperature is above a threshold (e.g., 38 °C) for performing an embodiment of the leak detection routine 150 as previously described. Thus, in some embodiments, the leak quantification routine 200 may be performed independently and separately from the leak detection routine 150.

Once the leak has been quantified via an embodiment of the quantification routine 200, still further analysis may be performed to further characterize the detected leak. For instance, such characterization may be useful for addressing the specific leak in question, and for improving the design or manufacture of the climate control system 10 (such as when the leak characterization is accumulated with similar leak characterizations for other, similarly configured climate control systems). Thus, the additional leak characterization analysis described herein may be performed (at least partially) by controller 80, or may be performed (again, at least partially) by a separate computing device, such as a separate computer, server, etc. that may be remotely positioned from the climate control system 10.

In some embodiments, an embodiment of the leak quantification routine 200 may also include determining the size of the leak orifice. For instance, the size of the leak orifice associated with the detected and quantified leak may be estimated by use of the Choke Flow Law or Saint-Venant-Wantzel law as shown in the following mathematical expression:

$$A = \frac{\dot{m}_{leak,av}}{c_d\sqrt{k\rho_v(P_{av}-P_{atm})(\frac{2}{k+1})^{\frac{k+1}{k-1}}}} \qquad (4)$$

where A is the is the cross-sectional area of the leak orifice, $\dot{m}_{leak,av}$ is the average mass flow of the refrigerant leak, $c_d$ is the discharge coefficient (which may be assumed to be in a range of from 0.61 to 0.8 in some embodiments), k is the heat capacity ratio (variable with refrigerant type and temperature) which is also known as the adiabatic index, the ratio of specific heats, or Laplace's coefficient, $\rho_v$ is the density of the refrigerant vapor, and $P_{atm}$ is the atmospheric pressure of the space outside the refrigeration system (which may be assumed as 101325 Pa). The average mass flow of the refrigerant leak ($\dot{m}_{leak,av}$) may be determined based on the mass of the leaked refrigerant (e.g., determined via blocks 202-206 as previously described) and the estimated amount of time that has elapsed during the leak event (which may be an amount of time since the last leak detection and/or quantification routine has been performed, or another set period or amount of time that is related to the leak).

The density of the vapor refrigerant ($\rho_v$) in Equation (4) above may vary with the type of refrigerant and the temperature. In some embodiments, the density of the vapor refrigerant ($\rho_v$) in Equation (4) may be determined by use of the following mathematical expression (which is based on the Ideal Gas law):

$$\rho_v = \frac{P_{av}}{RT_{av}} \qquad (5)$$

where $P_{av}$ is the average pressure within the climate control system (e.g., as an average across the pressure sensors 91, 93, 95 or a subset thereof), $T_{av}$ is the average or ambient temperature determined by use of one or more of the temperature sensors 90, 92, 96, 94, 97, 98, 99 as previously described, and R is the gas constant based on the type of refrigerant(s) used in the climate control system.

In some embodiments, the leak orifice may be assumed to be circular or generally circular. In this case, once the cross-sectional area A of the leak orifice is determined via Equations (4) and (5), the effective or estimated diameter ($d_{eff}$) of the leak orifice may be determine via the following mathematical expression:

$$d_{eff} = \sqrt{4\frac{A}{\pi}} \qquad (6).$$

Without being limited to this or any other theory, estimation of the size of the leak orifice (e.g., via cross-sectional area A and/or effective diameter $D_{eff}$) may be useful for characterizing a severity of the leak in question. Larger leaks may pose a greater concern for a manufacturer or servicer of the climate control system 10 (especially when flammable refrigerants are utilized). Thus, determining the size of the leak orifice may help the manufacturer or servicer to identify leak events that may require additional investigation and potential design, material, configuration changes to prevent or reduce further occurrences of a similar leak in the future.

In addition, in some embodiments, characterizing the detected and quantified leak may include assigning a risk level based on one or more determined parameters, such as a mass flow of refrigerant through the leak (e.g., such as the average mass flow, $\dot{m}_{leak,av}$, a peak mass flow, or other suitable mass flow value), the size of the leak (e.g., the cross-sectional area A, effective diameter $D_{eff}$,), and/or other values. For instance, in some particular embodiments, a "hazard level" may be assigned to a leak based on the average mass flow $\dot{m}_{leak,av}$ of refrigerant therethrough (which may be determined via leak quantification routine 200 in FIG. 5 as previously described). The hazard levels may include any suitable label, such as "non-hazardous," "Small," "Medium," "High," "Highest," etc., and each defined hazard level may be associated with a particular value or range for the average mass flow $\dot{m}_{leak,av}$.

The hazard levels (and the associated values or ranges of $\dot{m}_{leak,av}$) may be selected based on the particular hazard posed by the leaking refrigerant. For instance, dependent on the type of refrigerant(s) used in the climate control system 10, the primary hazard posed by the refrigerant may be environmental in that the leaked refrigerant may be damaging to the atmosphere, soil, or local water bodies. Conversely, when a flammable refrigerant is utilized (which is generally more environmentally friendly as previously described), the primary hazard posed by the leaked refrigerant is combustion of the leaked refrigerant. Thus, the particular values or ranges of the average mass flow $\dot{m}_{leak,av}$ for the leak may be selected in order to properly place the leak under the appropriate hazard level.

In some embodiments, the hazard levels may be assigned via look up table or matrix. Conversely, a mathematical function may be constructed that assigns a particular hazard level to the leak depending on the determined value of the average mass flow $\dot{m}_{leak,av}$.

Further, the additional characterization of the leak may include determining a general likelihood or probability that a similar leak even will occur in the future for the climate control system 10 or other similarly configured climate control systems. Specifically, as data is accumulated on a plurality of leak events for a plurality of climate control system 10, useful estimations of a probably of certain leak events may be determined so as to inform further design, configuration, or other changes to the climate control system 10. The probability determination may utilize the hazard levels previously described as a method of grouping or distinguishing different leak events. If a particular climate control system (e.g., climate control system 10) shows a sufficiently high probability to develop a large leak (such as leaks in any of the "Medium," "High," "Highest," hazard levels as previously described), then a manufacturer may respond with further investigation to inform what changes (if any) may need to be made to the climate control system 10 to avoid similar leaks from occurring in the future (among other potential actions).

The leak detection (e.g., routine 150 in FIG. 4), leak quantification (e.g., routine 200 in FIG. 5), or the additional leak characterization techniques described herein may be at least partially implemented by controller 80 in order to generate an appropriate warning or alarm message to a user of the climate control system 10 in the event of a leak (or a leak of a sufficiently high "hazard level"). For instance, the controller 80, upon detecting a leak or determining a detected leak is above a defined threshold or is of a particular hazard level, etc. may output a corresponding warning message, which may be audible (siren or other audible alarm), visual (lights, strobes), tactile (vibrating steering wheel in the tractor 5), or a combination thereof. The warning or alarm message may prevent the user from operating the climate control system 10 to avoid further damage to the climate control system 10, to minimize the mass of leaked refrigerant, to prevent open-air combustion of the leaked refrigerant (in the case that the refrigerant is flammable), etc.

As explained above and reiterated below, the present disclosure includes, without limitation, the following example implementations.

Clause 1: A method of detecting a refrigerant leak in a climate control system, the method comprising: (a) determining that the climate control system is in a deactivated and equalized state; (b) comparing an average pressure of a refrigerant of the climate control system to a saturated vapor pressure of the refrigerant at an average temperature within the climate control system, in response to (a); and (c) detecting a refrigerant leak based at least in part on (b).

Clause 2: The method of any of the clauses, wherein (a) further comprises determining that one or more a temperature and a pressure of the refrigerant in the climate control system has equalized.

Clause 3: The method of any of the clauses, wherein (a) further comprises: (a1) monitoring a plurality of refrigerant temperature sensors and a plurality of refrigerant pressure sensors distributed in the climate control system after deactivation of the climate control system; and (a2) determining that at least the plurality of refrigerant temperature sensors or at least the plurality of refrigerant pressure sensors are detecting temperatures or pressures, respectively, within a predetermined range of one another.

Clause 4: The method of any of the clauses, wherein (a2) comprises determining that the plurality of refrigerant temperature sensors are detecting temperatures within about 2 degrees Kelvin of one another and that the plurality of refrigerant pressure sensors are detecting pressures within about 10 Kilopascals (kPa) of one another.

Clause 5: The method of any of the clauses, wherein (b) comprises determining that the average pressure is less than the saturated vapor pressure by a predetermined amount.

Clause 6: The method of any of the clauses, wherein (b) comprises determining that the average pressure is less than or equal to about 80% of the saturated vapor pressure.

Clause 7: The method of any of the clauses, further comprising: (d) determining that the average temperature is below a threshold; and (e) conditioning performance of (b) based on (d).

Clause 8: The method of any of the clauses, further comprising: (f) at least partially quantifying the refrigerant leak based on the average pressure and the average temperature.

Clause 9: The method of any of the clauses, wherein (f) further comprises: (f1) determining a first mass of a remaining refrigerant in the climate control system that is dissolved into a lubricant for a compressor of the climate control system based at least in part on the average pressure; (f2) determining a second mass of the remaining refrigerant that is in a vaporous phase in the climate control system based at least in part on the average pressure and the average temperature; and (f3) subtracting the first mass and the second mass from an initial charged mass of refrigerant to determine a mass of leaked refrigerant.

Clause 10: The method of any of the clauses, further comprising: (g) determining an estimated cross-sectional area of a leak orifice of the refrigerant leak based at least in part on the mass of leaked refrigerant.

Clause 11: A climate control system comprising: a refrigerant circuit; a compressor configured to circulate a refrigerant through the refrigerant circuit; a plurality of sensors distributed through the refrigerant circuit that are configured to detect pressures and temperatures of a refrigerant in the refrigerant circuit; and a controller communicatively coupled to the plurality of sensors and configured to: determine that the climate control system is in a deactivated and equalized state via the plurality of sensors; compare an average pressure of the refrigerant to a saturated vapor pressure of the refrigerant at an average temperature within the refrigerant circuit; and detect a refrigerant leak based at least in part on the comparison between the average pressure and the saturated vapor pressure.

Clause 12: The climate control system of any of the clauses, wherein the controller is configured to determine that the climate control system is in a deactivated and equalized state by at least determining that a temperature and a pressure of the refrigerant has equalized by use of the plurality of sensors.

Clause 13: The climate control system of any of the clauses, wherein the controller is configured to determine that the temperature and the pressure of the refrigerant has equalized by: determining that the plurality of sensors are detecting temperatures and pressures of the refrigerant that are within a predetermined range of one another.

Clause 14: The climate control system of any of the clauses, wherein the controller is configured to detect a leak in response to the average pressure being less than the saturated vapor pressure.

Clause 15: The climate control system of any of the clauses, wherein the controller is configured to at least partially quantify the refrigerant leak based on the average pressure and an average temperature of the refrigerant by use of the plurality of sensors.

Clause 16: The climate control system of any of the clauses, wherein the controller is configured to at least partially quantify the refrigerant leak by: (f1) determining a first mass of a remaining refrigerant in the climate control system that is dissolved into a lubricant for a compressor of the climate control system based at least in part on the average pressure; (f2) determining a second mass of the remaining refrigerant that is in a vaporous phase in the climate control system based at least in part on the average pressure and the average temperature; and (f3) subtracting the first mass and the second mass from an initial charged mass of refrigerant to determine a mass of leaked refrigerant.

Clause 17: A non-transitory, machine-readable medium including instructions that, when executed by a processor, cause the processor to: (a) determine that a climate control system is in a deactivated and equalized state; (b) compare an average pressure of a refrigerant of the climate control system to a saturated vapor pressure of the refrigerant at an average temperature within the climate control system, in response to (a); and (c) detect a refrigerant leak based at least in part on (b).

Clause 18: The non-transitory, machine-readable medium of any of the clauses, wherein (a) further comprises determine that one or more a temperature and a pressure of the refrigerant in the climate control system has equalized.

Clause 19: The non-transitory, machine-readable medium of any of the clauses, wherein (a) further comprises determine that at least a plurality of refrigerant temperature sensors distributed in the climate control system or at least a plurality of refrigerant pressure sensors distributed in the climate control system are detecting temperatures or pressures, respectively, within a predetermined range of one another.

Clause 20: The non-transitory, machine-readable medium of any of the clauses, wherein (b) comprises determine that the average pressure is less than the saturated vapor pressure by a predetermined amount.

Clause 21: The non-transitory, machine-readable medium of any of the clauses, wherein the instructions, when executed by the processor, further cause the processor to: (d) determine that the average temperature is below a threshold; and (e) condition performance of (b) based on (d).

Clause 22: The non-transitory, machine-readable medium of any of the clauses, wherein the instructions, when executed by the processor, further cause the processor to: (f) at least partially quantify the refrigerant leak based on the average pressure and the average temperature.

Clause 23: The non-transitory, machine-readable medium of any of the clauses, wherein (f) comprises: (f1) determine a first mass of a remaining refrigerant in the climate control system that is dissolved into a lubricant for a compressor of the climate control system based at least in part on the average pressure; (f2) determine a second mass of the remaining refrigerant that is in a vaporous phase in the climate control system based at least in part on the average pressure and the average temperature; and (f3) subtract the first mass and the second mass from an initial charged mass of refrigerant to determine a mass of leaked refrigerant.

Embodiments disclosed herein include systems and methods for detecting a refrigerant leak in a climate control system while the climate control system is deactivated. In some embodiments, the embodiments disclosed herein may detect and even potentially quantify the refrigerant leak based on one or more pressures and temperatures of the refrigerant within the climate control system when the climate control system is in a deactivated and equalized stated. Thus, through use of the embodiments disclosed herein, a refrigerant leak may be discovered more quickly in a climate control system, so that appropriate maintenance and repairs may be made.

In some embodiments, the climate control system 10 of FIG. 2 may be configured to provide cool air to a plurality of different compartments defined in the interior space 12. For instance, in some embodiments, the climate control system 10 may include a plurality of different parallel heat exchangers that are similar to the second heat exchanger 44 and that are configured to receive parallel flows of refrigerant from the first heat exchanger 32. In these embodiments, each of the plurality of parallel heat exchangers (which are similar to the heat exchanger 44) may be coupled to a separate expansion device (e.g., similar to expansion device 36) and are configured to provide separate airflows at different temperatures to the different, sub-compartments or spaces defined in the interior space 12. It should be appreciated that the leak detection and quantification routines (e.g., routines 150, 200 in FIGS. 4 and 5, respectively) described herein may be applied to detect and quantify leaks in a climate control system 10 that is configured in this manner.

The preceding discussion is directed to various exemplary embodiments. However, one of ordinary skill in the art will understand that the examples disclosed herein have broad application, and that the discussion of any embodiment is meant only to be exemplary of that embodiment, and not intended to suggest that the scope of the disclosure, including the claims, is limited to that embodiment.

The drawing figures are not necessarily to scale. Certain features and components herein may be shown exaggerated in scale or in somewhat schematic form and some details of conventional elements may not be shown in interest of clarity and conciseness.

In the discussion herein and in the claims, the terms "including" and "comprising" are used in an open-ended fashion, and thus should be interpreted to mean "including, but not limited to ...." Also, the term "couple" or "couples" is intended to mean either an indirect or direct connection. Thus, if a first device couples to a second device, that connection may be through a direct connection of the two devices, or through an indirect connection that is established via other devices, components, nodes, and connections. In addition, as used herein, the terms "axial" and "axially" generally mean along or parallel to a given axis (e.g., central axis of a body or a port), while the terms "radial" and "radially" generally mean perpendicular to the given axis. For instance, an axial distance refers to a distance measured along or parallel to the axis, and a radial distance means a distance measured perpendicular to the axis. Further, when used herein (including in the claims), the words "about," "generally," "substantially," "approximately," and the like, when used in reference to a stated value mean within a range of plus or minus 10% of the stated value.

While exemplary embodiments have been shown and described, modifications thereof can be made by one skilled in the art without departing from the scope or teachings herein. The embodiments described herein are exemplary only and are not limiting. Many variations and modifications of the systems, apparatus, and processes described herein are possible and are within the scope of the disclosure. Accordingly, the scope of protection is not limited to the embodiments described herein, but is only limited by the claims that follow, the scope of which shall include all equivalents of the subject matter of the claims. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simplify subsequent reference to such steps.

## Claims

1. A method of detecting a refrigerant leak in a climate control system, the method comprising:

   (a) determining that the climate control system is in a deactivated and equalized state;
   (b) comparing an average pressure of a refrigerant of the climate control system to a saturated vapor pressure of the refrigerant at an average temperature within the climate control system, in response to (a); and
   (c) detecting a refrigerant leak based at least in part on (b).

2. The method of claim 1, wherein (a) further comprises determining that one or more a temperature and a pressure of the refrigerant in the climate control system has equalized.

3. The method of claim 2, wherein (a) further comprises:

   (a1) monitoring a plurality of refrigerant temperature sensors and a plurality of refrigerant pressure sensors distributed in the climate control system after deactivation of the climate control system; and
   (a2) determining that at least the plurality of refrigerant temperature sensors or at least the plurality of refrigerant pressure sensors are detecting temperatures or pressures, respectively, within a predetermined range of one another.

4. The method of claim 3, wherein (a2) comprises determining that the plurality of refrigerant temperature sensors are detecting temperatures within about 2 degrees Kelvin of one another and that the plurality of refrigerant pressure sensors are detecting pressures within about 10 Kilopascals (kPa) of one another.

5. The method of any one of the preceding claims, wherein (b) comprises determining that the average pressure is less than the saturated vapor pressure by a predetermined amount;
   optionally wherein (b) comprises determining that the average pressure is less than or equal to about 80% of the saturated vapor pressure.

6. The method of any one of the preceding claims, further comprising:

   (d) determining that the average temperature is below a threshold; and
   (e) conditioning performance of (b) based on (d).

7. The method of any one of the preceding claims, further comprising:
   (f) at least partially quantifying the refrigerant leak based on the average pressure and the average temperature.

8. The method of claim 7, wherein (f) further comprises:

(f1) determining a first mass of a remaining refrigerant in the climate control system that is dissolved into a lubricant for a compressor of the climate control system based at least in part on the average pressure;

(f2) determining a second mass of the remaining refrigerant that is in a vaporous phase in the climate control system based at least in part on the average pressure and the average temperature; and

(f3) subtracting the first mass and the second mass from an initial charged mass of refrigerant to determine a mass of leaked refrigerant;

optionally wherein the method further comprises:

(g) determining an estimated cross-sectional area of a leak orifice of the refrigerant leak based at least in part on the mass of leaked refrigerant.

9.  A climate control system comprising:

a refrigerant circuit;

a compressor configured to circulate a refrigerant through the refrigerant circuit;

a plurality of sensors distributed through the refrigerant circuit that are configured to detect pressures and temperatures of a refrigerant in the refrigerant circuit; and

a controller communicatively coupled to the plurality of sensors and configured to:

determine that the climate control system is in a deactivated and equalized state via the plurality of sensors;

compare an average pressure of the refrigerant to a saturated vapor pressure of the refrigerant at an average temperature within the refrigerant circuit; and

detect a refrigerant leak based at least in part on the comparison between the average pressure and the saturated vapor pressure.

10. The climate control system of claim 9, wherein the controller is configured to determine that the climate control system is in a deactivated and equalized state by at least determining that a temperature and a pressure of the refrigerant has equalized by use of the plurality of sensors.

11. The climate control system of claim 10, wherein the controller is configured to determine that the temperature and the pressure of the refrigerant has equalized by:
determining that the plurality of sensors are detecting temperatures and pressures of the refrigerant that are within a predetermined range of one another.

12. The climate control system of any one of claims 9-11, wherein the controller is configured to detect a leak in response to the average pressure being less than the saturated vapor pressure;
optionally wherein the controller is configured to at least partially quantify the refrigerant leak based on the average pressure and an average temperature of the refrigerant by use of the plurality of sensors.

13. The climate control system of claim 12, wherein the controller is configured to at least partially quantify the refrigerant leak based on the average pressure and an average temperature of the refrigerant by use of the plurality of sensors; and
wherein the controller is configured to at least partially quantify the refrigerant leak by:

(f1) determining a first mass of a remaining refrigerant in the climate control system that is dissolved into a lubricant for a compressor of the climate control system based at least in part on the average pressure;

(f2) determining a second mass of the remaining refrigerant that is in a vaporous phase in the climate control system based at least in part on the average pressure and the average temperature; and

(f3) subtracting the first mass and the second mass from an initial charged mass of refrigerant to determine a mass of leaked refrigerant.

14. A non-transitory, machine-readable medium including instructions that, when executed by a processor, cause the processor to conduct the method of any one of claims 1-8.

15. The non-transitory, machine-readable medium of claim 14, wherein (a) further comprises determining that at least a plurality of refrigerant temperature sensors distributed in the climate control system or at least a plurality of refrigerant pressure sensors distributed in the climate control system are detecting temperatures or pressures, respectively, within a predetermined range of one another.

**FIG. 1**

EP 4 722 617 A1

**FIG. 2**

FIG. 3

FIG. 4

EP 4 722 617 A1

200

Determine a first mass of a remaining refrigerant that is dissolved into a lubricant for a compressor of the climate control system ~ 202

Determine a second mass of the remaining refrigerant that is in a vaporous phase in the climate control system ~ 204

Subtract the first mass and the second mass from an initial charged mass of refrigerant to determine a mass of leaked refrigerant ~ 206

**FIG. 5**

Europäisches
Patentamt

European
Patent Office

Office européen
des brevets

# EUROPEAN SEARCH REPORT

**Application Number**

EP 25 20 7138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/132010 A1 (MITSUBISHI ELECTRIC CORP [JP]) 13 July 2023 (2023-07-13) | 1-7, 9-12,14, 15 | INV. F25B49/00 |
| Y | * paragraphs [0033] - [0046]; claims; figures 2,5 * | 8,13 | |
| Y | JP 2022 191869 A (TOYOTA MOTOR CORP) 28 December 2022 (2022-12-28) * paragraphs [0006] - [0010], [0027] - [0036], [0049] - [0059]; figures * | 8,13 | |
| A | EP 2 525 205 A1 (SERVICE SOLUTIONS US LLC [US]) 21 November 2012 (2012-11-21) * paragraphs [0050] - [0061]; figures * | 1-15 | |

**TECHNICAL FIELDS SEARCHED (IPC)**

F25B

The present search report has been drawn up for all claims

| Place of search | Date of completion of the search | Examiner |
|---|---|---|
| Munich | 24 February 2026 | Ritter, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 7138

24-02-2026

| Patent document cited in search report | Publication date | Patent family member(s) | | Publication date |
|---|---|---|---|---|
| WO 2023132010 A1 | 13-07-2023 | JP | 7621515 B2 | 24-01-2025 |
| | | JP | WO2023132010 A1 | 13-07-2023 |
| | | US | 2025216104 A1 | 03-07-2025 |
| | | WO | 2023132010 A1 | 13-07-2023 |
| JP 2022191869 A | 28-12-2022 | JP | 7567676 B2 | 16-10-2024 |
| | | JP | 2022191869 A | 28-12-2022 |
| EP 2525205 A1 | 21-11-2012 | EP | 2525205 A1 | 21-11-2012 |
| | | US | 2012291457 A1 | 22-11-2012 |